(19) Europäisches Patentamt
European Patent Office
Office européen des brevets

(11) **EP 4 757 119 A1**

(12) **EUROPEAN PATENT APPLICATION**
published in accordance with Art. 153(4) EPC

(43) Date of publication:
**10.06.2026 Bulletin 2026/24**

(21) Application number: **24848745.6**

(22) Date of filing: **26.06.2024**

(51) International Patent Classification (IPC):
**H02J 13/00** (2026.01)  **H02J 1/00** (2026.01)
**H02J 7/00** (2026.01)

(52) Cooperative Patent Classification (CPC):
**B60L 53/665; B60L 53/305; B60L 53/62;
B60L 53/65; B60L 53/66; B60L 53/67; B60L 53/68;
G06Q 30/04; H02J 1/00; H02J 7/00; H02J 13/00;**
B60L 2240/547; Y02T 10/70; Y02T 10/7072;
Y02T 90/12;                          (Cont.)

(86) International application number:
**PCT/JP2024/023070**

(87) International publication number:
**WO 2025/028085 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023 JP 2023125581**

(71) Applicant: **Yazaki Corporation
Tokyo 108-0075 (JP)**

(72) Inventor: **IKEGAYA, Koji
Susono-shi, Shizuoka 410-1194 (JP)**

(74) Representative: **Grünecker Patent- und
Rechtsanwälte
PartG mbB
Leopoldstraße 4
80802 München (DE)**

(54) **CHARGING SYSTEM**

(57)     The charging system (1) includes a plurality of charging connectors (5) arranged at a charging station (100) that charges a vehicle; a switching unit (10) disposed between one charging cable (120) at the charging station and the plurality of charging connectors; a creation unit configured to create a charging schedule for the charging cable based on a charging request from a user via wireless communication; and a control unit (20) configured to control the switching unit based on the created charging schedule and connects the charging cable to one charging connector connected to the vehicle to be charged.

FIG.1

(Cont. next page)

(52) Cooperative Patent Classification (CPC): (Cont.)
    Y02T 90/16

**Description**

Field

The present invention relates to a charging system.

Background

Conventionally, electric vehicle charging systems are known. Patent Literature 1 discloses an electric vehicle quick charging facility that includes a single electric vehicle quick charging device; a branching device provided with a plurality of branch power supply cables branched to supply power to respective parking spaces; a power supply cable connecting the electric vehicle quick charging device to the branching device; a plurality of charging operation devices each disposed in a respective one of the parking spaces and each connected to a corresponding one of the branch power supply cables, each of the charging operation devices being provided with a power supply connector connectable to an electric vehicle; a switch provided in the branching device and configured to select one of the branch power supply cables that supplies power to a terminal operation device in a parking space where an electric vehicle to be quick-charged is parked; and a control device configured to control opening and closing of the selected switch in response to an operation signal from the charging operation device.

Citation List

Patent Literature

Patent Literature 1: Japanese Utility Model Registration No. 3151047

Summary

Technical Problem

It is desirable to improve user convenience during the charging procedure. For example, in performing a charging request or other operations using a charging operation device in a parking space, the entire procedure is to be completed in the parking space, which is likely to restrict the user's actions.
An object of the present invention is to provide a charging system capable of improving user convenience.
Solution to Problem
A charging system according to the present invention includes a plurality of charging connectors disposed at a charging station that charges a vehicle; a switching unit disposed between one charging cable of the charging station and the plurality of charging connectors; a creation unit configured to create a charging schedule for the charging cable based on a charging request from a user via wireless communication; and a control unit configured to, based on the created charging schedule, control the switching unit and connect the charging cable to one of the charging connectors connected to a vehicle to be charged.

Advantageous Effects of Invention

The charging system according to the present invention includes a switching unit disposed between one charging cable and the plurality of charging connectors at a charging station, a creation unit that creates the charging schedule based on the charging request from an user via wireless communication, and a control unit that controls the switching unit based on the created charging schedule. The charging system according to the embodiment of the present invention is capable of improving user convenience during charging procedures.

Brief Description of Drawings

FIG. 1 is a diagram illustrating a configuration of a charging system according to an embodiment.
FIG. 2 is a diagram illustrating the charging system applied to a parking lot.
FIG. 3 is a diagram illustrating a configuration of a switching unit according to the embodiment.
FIG. 4 is a diagram illustrated to describe communication according to the embodiment.
FIG. 5 is a flowchart illustrating an operation of the charging system according to the embodiment.

FIG. 6 is a diagram illustrating an example of a message displayed on a mobile terminal.

FIG. 7 is a diagram illustrating an example of a message displayed on the mobile terminal.

FIG. 8 is a sequence diagram relating to charging according to the embodiment.

FIG. 9 is a sequence diagram relating to fee payment according to the embodiment.

FIG. 10 is a diagram illustrated to describe processing related to concurrent charging.

FIG. 11 is a diagram illustrating another configuration of the switching unit according to the embodiment.

Description of Embodiments

A charging system according to an embodiment of the present invention is described in detail below with reference to the drawings. Note that the present invention is not limited to embodiments herein. Furthermore, the components in the following embodiments include those that are readily conceivable by those skilled in the art and those are substantially identical.

[Embodiment]

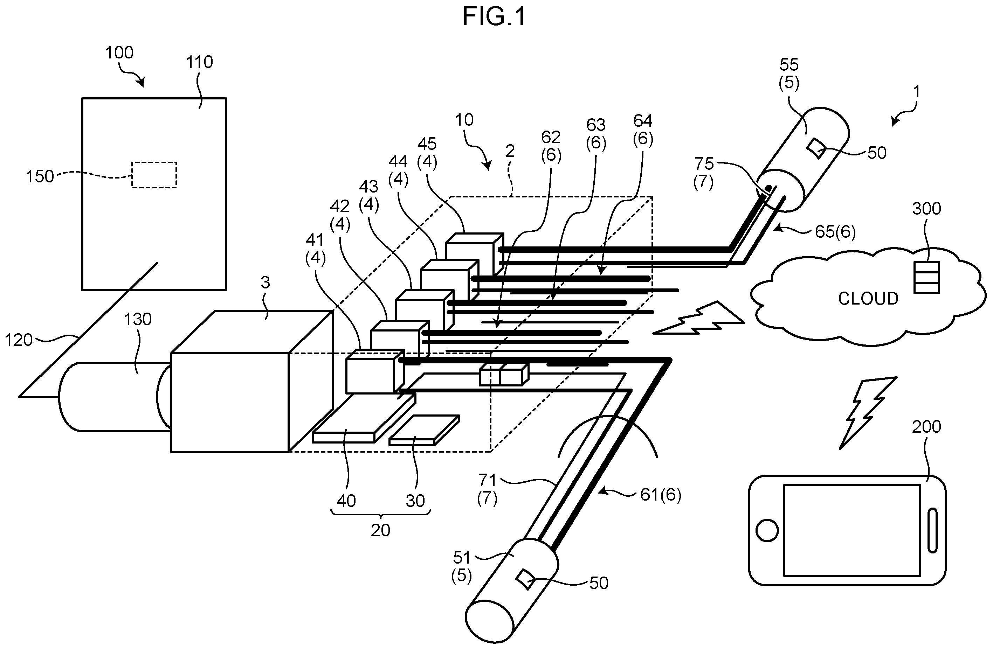

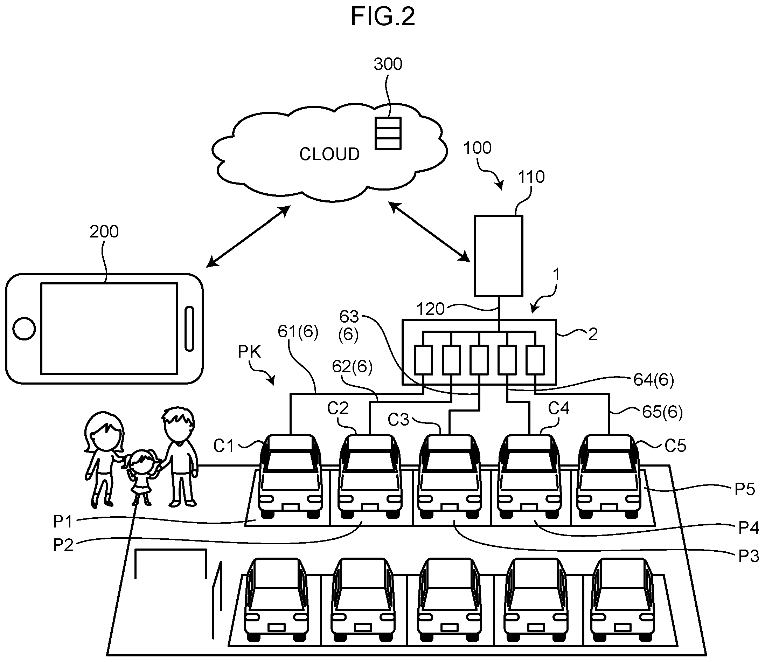

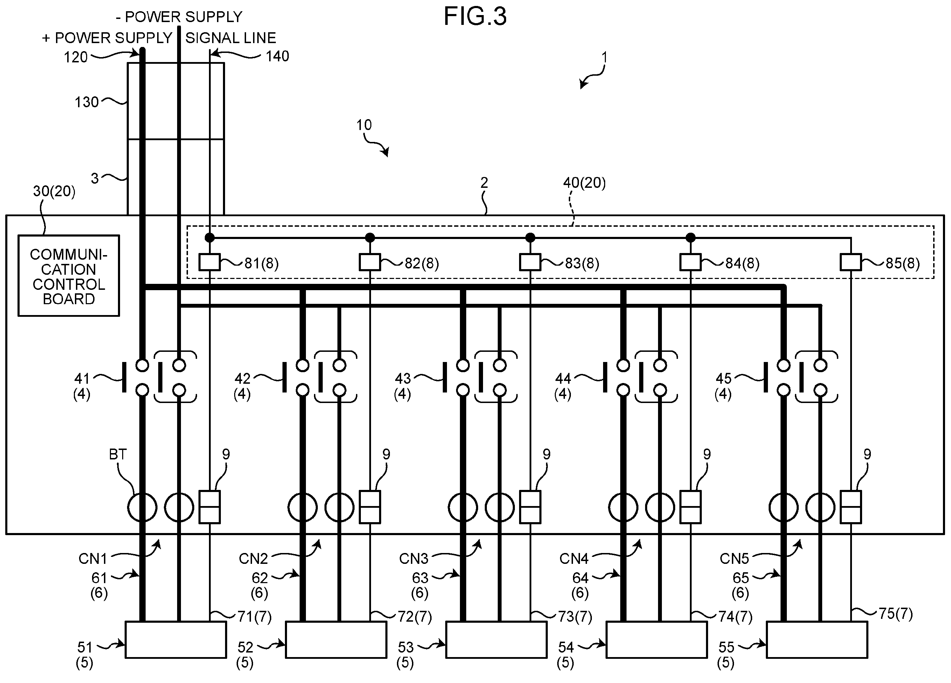

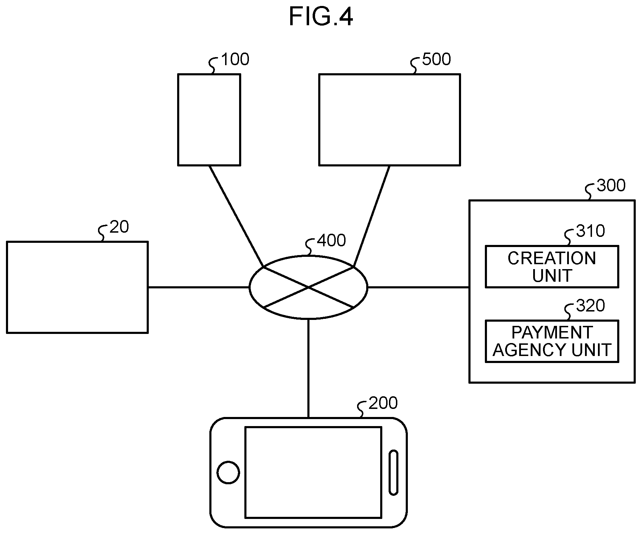

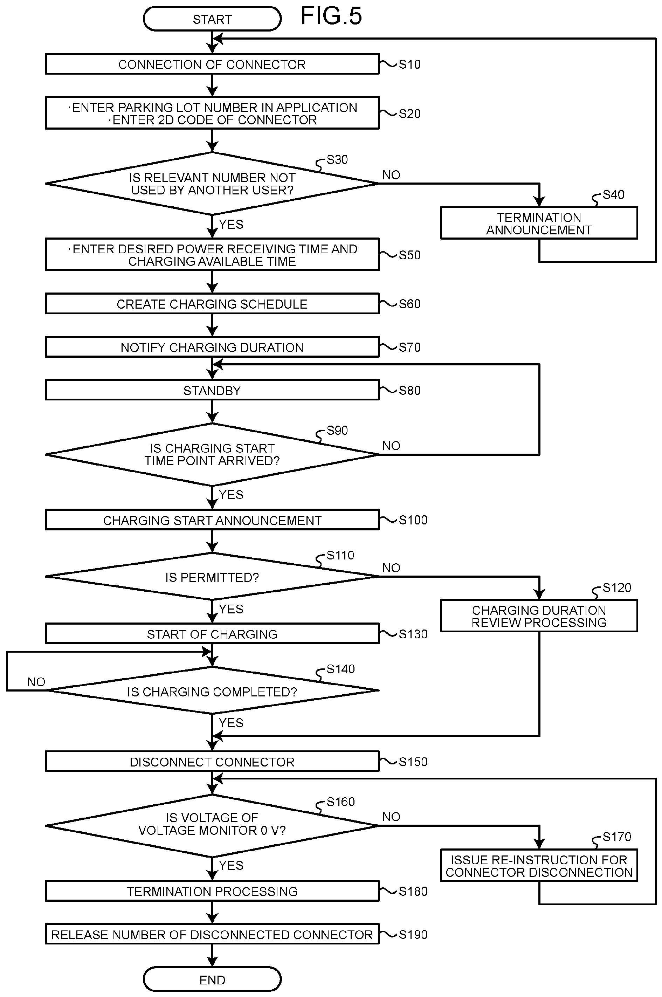

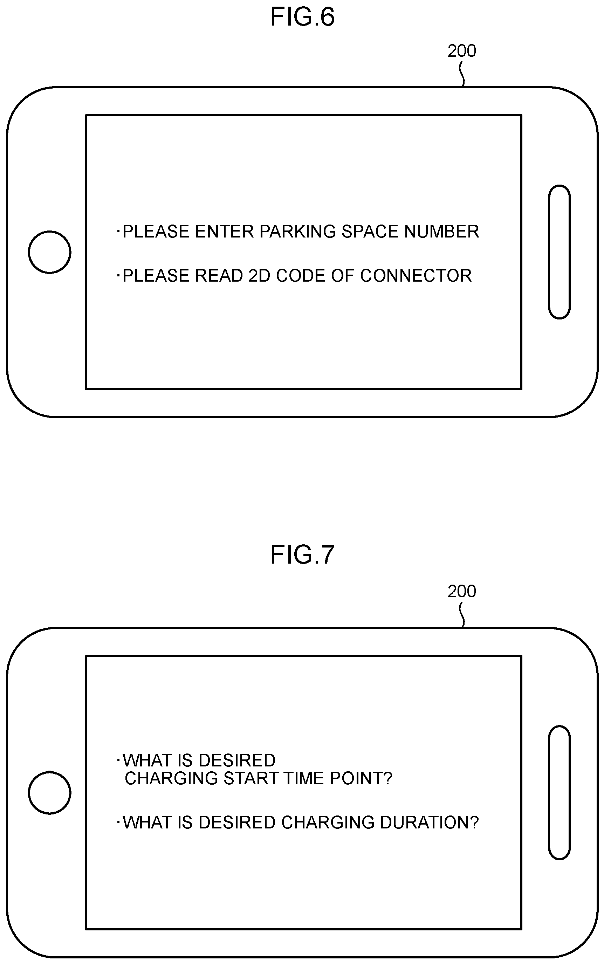

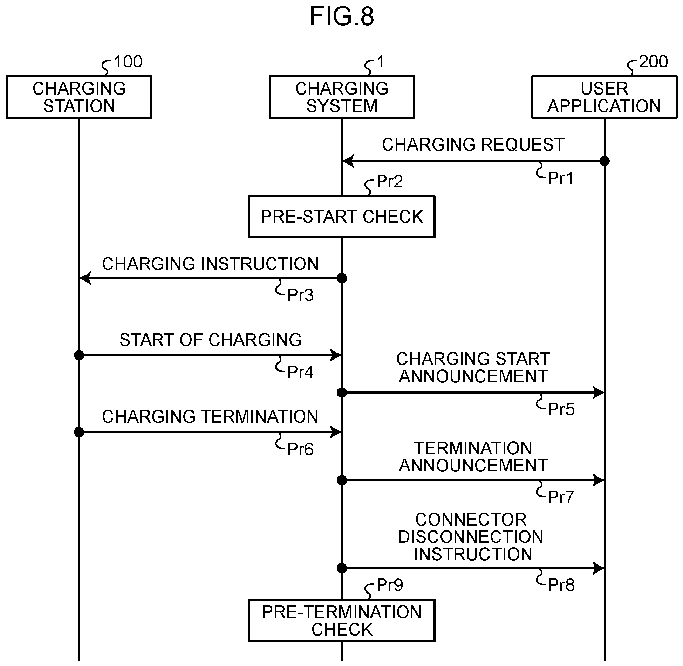

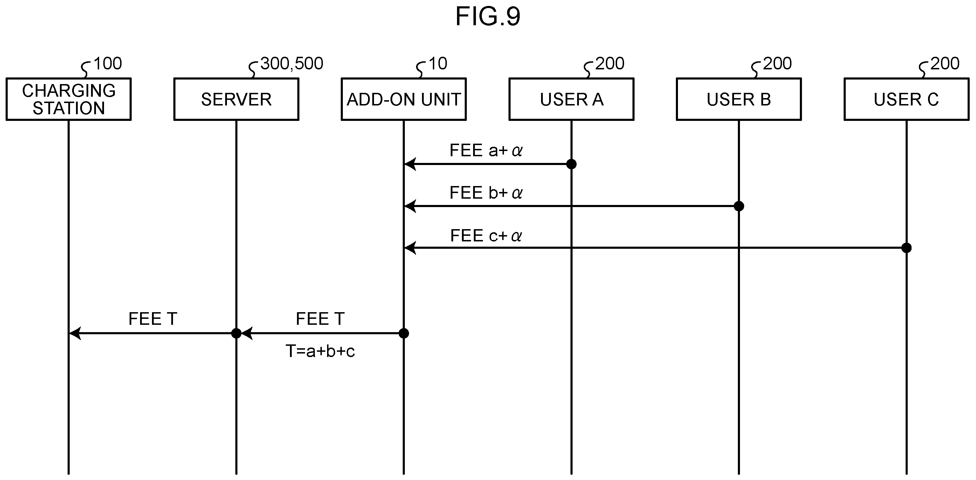

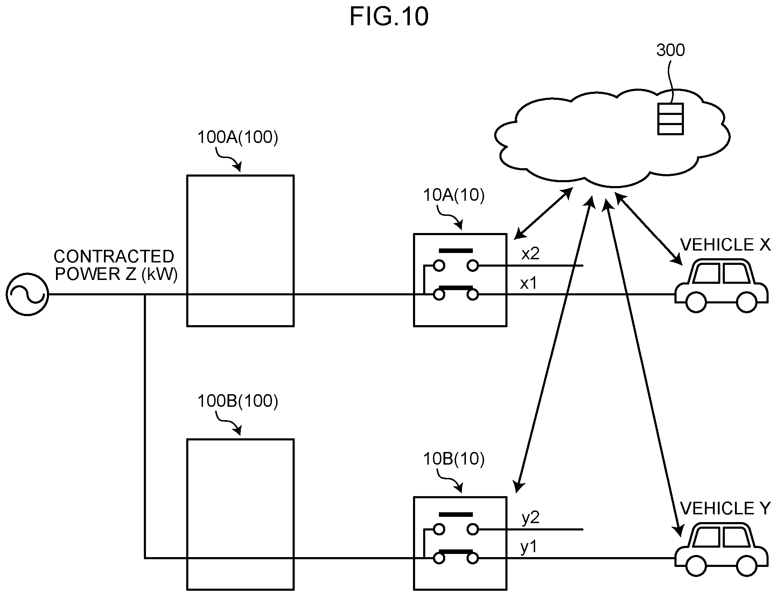

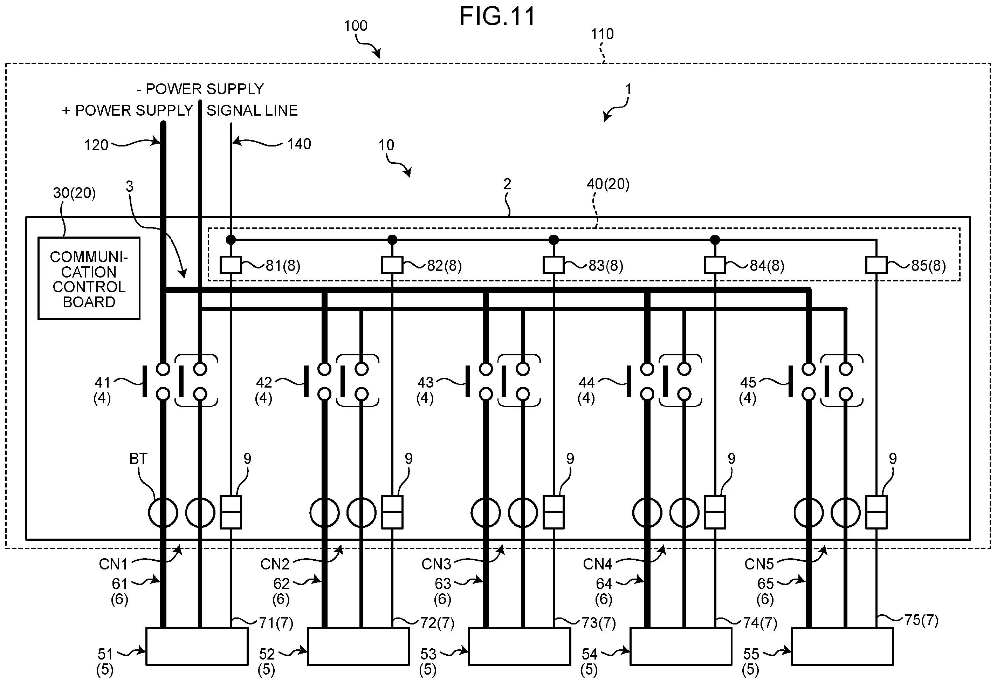

An embodiment is described with reference to FIGS. 1 to 11. The present embodiment relates to a charging system. FIG. 1 illustrates a configuration of a charging system according to an embodiment, FIG. 2 illustrates the charging system applied to a parking lot, FIG. 3 illustrates a configuration of a switching unit according to the embodiment, FIG. 4 is a diagram illustrated to describe communication according to the embodiment, FIG. 5 is a flowchart illustrating an operation of the charging system according to the embodiment, FIGS. 6 and 7 illustrate examples of messages displayed on a mobile terminal, FIG. 8 illustrates a sequence diagram for charging according to the embodiment, FIG. 9 illustrates a sequence diagram for fee payment according to the embodiment, FIG. 10 illustrates processing relating to concurrent charging, and FIG. 11 illustrates another configuration of the switching unit according to the embodiment.

As illustrated in FIGS. 1 to 3, a charging system 1 according to the present embodiment includes a plurality of charging connectors 5 branched from a single charging cable 120 at a charging station 100. A user connects an available charging connector 5 to a vehicle and registers a charging request. The charging system 1 creates a charging schedule for a plurality of vehicles connected to the plurality of charging connectors 5. Based on the charging schedule, the charging system 1 sequentially performs charging of each vehicle.

The charging system 1 according to the present embodiment enables a user, after connecting the charging connector 5 to a vehicle of the user, to remain away from the vehicle until charging is completed. For example, there is no need to stand by in line until charging of the preceding vehicle is completed. Accordingly, it is possible for the charging system 1 according to the present embodiment to improve convenience for users utilizing the charging station 100.

As illustrated in FIG. 1, the charging system 1 according to the present embodiment includes the plurality of charging connectors 5, a switching unit 10, and a server 300. The switching unit 10 of the present embodiment is an add-on unit that is attachable to an existing charging station 100. The switching unit 10 includes a housing 2, an input unit 3, a relay 4, a cable 6, a signal line 7, and a control unit 20.

The housing 2 is installed, for example, in the vicinity of the charging station 100. The housing 2 can also be installed on a pedestal. The housing 2 is preferably watertight. The relay 4 and the control unit 20 are accommodated inside the housing 2.

The input unit 3 is connected to the charging cable 120. The charging station 100 includes a main body 110, the charging cable 120, and a connector 130. The main body 110 includes a control circuit 150, which controls charging of the vehicle and communication with the vehicle. The charging cable 120 is a cable connected to the main body 110 for charging. The connector 130 is an existing connector included in the charging station 100 and is a connector for charging that is connectable to a vehicle. The connector 130 is connected to the main body 110 via the charging cable 120.

In the present embodiment, the input unit 3 is an inlet connected to the connector 130. The input unit 3 complies with the charging standards of the charging station 100. The input unit 3 can, for example, have a configuration similar to that of an inlet installed in a vehicle.

The switching unit 10 includes a plurality of the relays 4, a plurality of the cables 6, and a plurality of the signal lines 7. In the illustrated example, the switching unit 10 is connectable with up to five charging connectors 5. For example, a charging parking lot PK illustrated in FIG. 2 is provided with five parking spaces, from a first space P1 to a fifth space P5. In this case, five charging connectors 5 are connected to the switching unit 10. In other words, five vehicles are allowable to be connected to a single charging cable 120 and remain in a standby state.

As illustrated in FIG. 3, the switching unit 10 of the present embodiment includes a plurality of output units CN. More specifically, the switching unit includes five output units CN, from a first output unit CN1 to a fifth output unit CN5. The charging connectors 5 are connected to the respective output units CN. The charging system 1 illustrated in FIG. 3 includes, as the charging connector 5, a first connector 51, a second connector 52, a third connector 53, a fourth connector 54, and a fifth connector 55. The first connector 51 is connected to a first output unit CN1. Similarly, the connectors 52, 53, 54, and 55 are connected to output units CN2, CN3, CN4, and CN5, respectively. It is preferable that the count of charging connectors 5 connected to the switching unit 10 corresponds to the number assigned to the parking spaces.

The relay 4 is disposed between the input unit 3 and the plurality of output units CN1, CN2, CN3, CN4, and CN5. The switching unit 10 of the present embodiment includes, as the relay 4, a first relay 41, a second relay 42, a third relay 43, a fourth relay 44, and a fifth relay 45. The first relay 41 is disposed between the input unit 3 and the first output unit CN1. Similarly, the relays 42, 43, 44, and 45 are disposed between input unit 3 and the output units CN2, CN3, CN4, and CN5, respectively. The relay 4 connects the output unit CN to the charging cable 120 or disconnects the output unit CN from the charging cable 120.

The cable 6 is a charging cable that connects the relay 4 and the charging connector 5. In the present embodiment, the charging system 1 includes, as the cable 6, a first cable 61, a second cable 62, a third cable 63, a fourth cable 64, and a fifth cable 65. The first cable 61 is connected to the first output unit CN1 and connects the first connector 51 to the first relay 41. Similarly, the cables 62, 63, 64, and 65 are connected to the output units CN2, CN3, CN4, and CN5, respectively, and connect the connectors 52, 53, 54, and 55 to the relays 42, 43, 44, and 45, respectively.

The signal line 7 connects a communication terminal of the charging connector 5 to a signal branching board 40 of the control unit 20. More specifically, the signal line 7 is connected to the signal branching board 40 via a connector 9 disposed in the output unit CN. The communication terminal of the charging connector 5 is connected to a signal line of the vehicle. The signal line 7 is constituted by, for example, eight electric wires.

The control unit 20 includes a communication control board 30 and the signal branching board 40. The communication control board 30 includes a communication circuit for wide-area mobile communication using communication standards such as 4G or 5G, and a communication circuit for short-range wireless communications such as Bluetooth (registered trademark) or Wi-Fi. The communication control board 30 includes a control circuit for controlling the relay 4 and the like. The control circuit of the communication control board 30 controls the relay 4 in accordance with a charging schedule. In addition, the communication control board 30 is also capable of communicating with the signal branching board 40. The communication control board 30 is configured to be communicable with the control circuit 150 of the charging station 100. The communication control board 30 includes a detection unit that detects a battery voltage of a vehicle connected to the charging connector 5. The detection unit acquires the battery voltage, for example, from the signal branching board 40.

The signal branching board 40 connects a signal line 140 of the charging station 100 to any of the plurality of signal lines 7. As illustrated in FIG. 3, the charging system 1 according to the present embodiment includes, as the signal line 7, a first signal line 71, a second signal line 72, a third signal line 73, a fourth signal line 74, and a fifth signal line 75. The first signal line 71 is connected to the communication terminal of the first connector 51. Similarly, the signal lines 72, 73, 74, and 75 are connected to the communication terminals of the connectors 52, 53, 54, and 55, respectively.

The signal branching board 40 includes a plurality of the switches 8. The respective switches 8 are interposed between the signal line 140 of the charging station 100 and the plurality of signal lines 7. The switch 8 connects the signal line 140 to the signal line 7 or disconnects the signal line 140 from the signal line 7. The signal branching board 40 includes a first switch 81, a second switch 82, a third switch 83, a fourth switch 84, and a fifth switch 85. The first switch 81 is disposed between the signal line 140 and the first signal line 71. Similarly, the switches 82, 83, 84, and 85 are disposed between the signal line 140 and the signal lines 72, 73, 74, and 75, respectively.

The charging connector 5 is attachable to and detachable from the switching unit 10. The charging connector 5 and the cable 6 are fixed to the housing 2, for example, with a bolt BT. To facilitate connection, it is preferable that each of the output units CN and each of the cables 6 be provided with a connector. The connector of the cable 6 is connected to the connector of the output unit CN. In the present embodiment, the connector of the cable 6 is attached to the housing 2 with the bolt BT. The signal line 7 is connected to the switch 8 via the connector 9. In this manner, the charging connector 5 of the present embodiment is attachable to and detachable from the switching unit 10.

The communication control board 30 controls the relay 4 in accordance with the created charging schedule. The communication control board 30 also controls the signal branching board 40 in accordance with the charging schedule. For example, in the case of charging a vehicle connected to the first connector 51 from the charging station 100, the communication control board 30 turns the first relay 41 ON and turns the other relays 42, 43, 44, and 45 OFF. The communication control board 30 also instructs the signal branching board 40 to turn the first switch 81 ON and the other switches 82, 83, 84, and 85 OFF. As a result, the vehicle connected to the first connector 51 is connected to the charging cable 120 and the signal line 140 of the charging station 100.

In the case where charging is complete and the first connector 51 is disconnected from the charging station 100, the communication control board 30 turns the first relay 41 OFF. Furthermore, the communication control board 30 instructs the signal branching board 40 to turn the first switch 81 OFF.

As illustrated in FIG. 4, the server 300 communicates with the control unit 20, a mobile terminal 200 of the user, and a management server 500 via an Internet network 400. The server 300 is, for example, a cloud server, but is not limited thereto. The management server 500 is a server that executes payment processing for the charging station 100.

The server 300 includes a creation unit 310 and a payment agency unit 320. The creation unit 310 creates a charging schedule for the charging cable 120. The payment agency unit 320 performs payment for the charging fee to the management server 500 on behalf of the user. The payment agency unit 320 collects, from the user, the charging fee paid on behalf of the user. Moreover, the payment agency unit 320 can execute payment to the management server 500 after collecting the charging fee from the user.

The operation of the charging system 1 according to the present embodiment is described with reference to FIG. 5. In step S10, the user connects the charging connector 5 to the vehicle. For example, in the case of the parking lot PK illustrated in FIG. 2, the user parks the vehicle in any one of the parking spaces from the first space P1 to the fifth space P5. The user connects the charging connector 5 corresponding to the parking space to be used to an inlet of the vehicle. After execution in step S10, the process proceeds to step S20.

In step S20, the user enters information to identify the circuit to be used for the charging. The processing in step S20 is executed, for example, by an application program installed on the mobile terminal 200 of the user. As illustrated in FIG. 6, the application program displays a message on the mobile terminal 200 prompting the user to enter the parking space number and to read (scan) the two-dimensional (2D) code on the charging connector 5.

In this example, the user's vehicle is a vehicle C1 illustrated in FIG. 2. In this case, the number assigned to the first space P1 in which the vehicle C1 is parked is "1". The user enters "1" as the parking space number. As illustrated in FIG. 1, each of the charging connectors 5 is provided with a two-dimensional code 50, such as a QR code (registered trademark). The two-dimensional code 50 includes information used to identify the respective charging connectors 5. For example, the two-dimensional code 50 of the first connector 51 includes information indicating that the charging connector 5 having the two-dimensional code 50 is the first connector 51. The two-dimensional code 50 can also include information used to identify the charging station 100. The user reads the two-dimensional code 50 with a camera of the mobile terminal 200.

The entered parking space number and the information contained in the read two-dimensional code 50 are transmitted from the mobile terminal 200 to the server 300. Upon receipt of the parking space number and the information contained in the two-dimensional code 50 by the server 300, the process proceeds to step S30.

In step S30, a determination is made as to whether another user is using the relevant parking space number. The server 300, upon receiving a charging request from a user for each parking space number, sets the status of the relevant parking space number to "in use". In the case where the charging connector 5 corresponding to the relevant parking space number is removed from the vehicle, the server 300 releases the relevant number. In other words, the status of the parking space corresponding to the relevant number is set to available for use. In the case where the parking space number obtained in step S20 is available, the server 300 makes a positive determination in step S30 and instructs the application program to proceed to the subsequent entry. If the positive determination is made in step S30, the process proceeds to step S50, whereas if a negative determination is made, i.e., the number is in use, the process proceeds to step S40.

In step S40, a termination announcement is made. The server 300 issues a command via communication to the application program to make a termination announcement. The application program performs a display or audio output of the termination announcement. The termination announcement notifies the user that the desired parking space number is already in use and prompts the user to use another parking space number. After execution in step S40, the process proceeds to step S10.

In step S50, the user's desired charging duration is entered. As illustrated in FIG. 7, the application program displays on the mobile terminal 200 a prompt to enter the desired charging start time point and charging duration. The start time point and the charging duration desired by the user and entered via the mobile terminal 200 are transmitted to the server 300. Once the server 300 receives the desired start time point and charging duration, the process proceeds to step S60.

In step S60, a charging schedule is created. The charging schedule is created by the creation unit 310 of the server 300. The creation unit 310 creates the charging schedule for the charging cable 120 based on the user's preferences acquired in step S50 and the preferences of other users acquired from other users. The charging schedule is an allocation of charging duration to each parking space. In other words, the creation unit 310 performs allocation of charging duration to each of the charging connectors 5 in the charging schedule.

In the charging system 1 according to the present embodiment, the count of vehicles that are chargeable from one charging cable 120 is one. Thus, if desired charging durations overlap among multiple users, the adjustment of charging durations is performed. In the case the desired charging durations overlap among multiple users, the server 300 creates a charging schedule in which, for example, a user who enters desired charging duration earlier is given priority. Once the charging schedule is created, the process proceeds to step S70.

In step S70, the charging duration notification is made. The server 300 transmits the scheduled charging duration to the mobile terminal 200. The mobile terminal 200 of the user displays the scheduled charging start time point and charging duration. Moreover, the charging end time point can be notified instead of the charging duration. After execution in step S70, the process proceeds to step S80.

In step S80, standby is performed until the charging begins. The charging connector 5 of the parking space corresponding to the number entered in step S20 remains in a standby state until the scheduled time point. After execution in step S80, the process proceeds to step S90.

In step S90, a determination is made as to whether the arrival of the charging start time point occurs. If the positive determination is made in step S90 that the charging start time point arrives, the process proceeds to step S100, whereas if the negative determination is made, the process proceeds to step S80.

In step S100, a charging start announcement is made. The server 300 issues, via communication, a command to the application program to provide the charging start announcement. The application program performs a display or audio output indicating the arrival of the charging start time point. After execution in step S100, the process proceeds to step S110.

In step S110, a determination is made as to whether charging is permitted. In the charging start announcement, the application program asks the user as to whether charging may be started. If the user's response to the question indicates that charging is permitted, a positive determination is made in step S110. The application program transmits the user's response to the server 300. If the positive determination is made in step S110, the process proceeds to step S130, whereas if the negative determination is made, the process proceeds to step S120.

In step S120, the charging reservation is canceled and processing for reviewing the charging duration is performed. The server 300 creates a charging schedule excluding the canceled charging reservation. After execution in step S120, the process proceeds to step S150.

In step S130, charging of the vehicle begins. The processing sequence for charging the vehicle is described with reference to FIG. 8. In process Pr1, a charging request is made from the application program to the charging system 1. This charging request corresponds, for example, to the permission for charging in step S110.

In process Pr2, a pre-start check is performed by the charging system 1. The communication control board 30 turns ON the relay 4 and the switch 8 corresponding to the vehicle to be charged and turns OFF the other relays 4 and the other switches 8. The communication control board 30 acquires, via the signal line 7, the battery voltage of the target vehicle. If the battery voltage is detected, the pre-start check is completed.

In process Pr3, a charging instruction is transmitted from the charging system 1 to the charging station 100. The charging system 1 transmits, for example, the desired charging duration to the charging station 100.

In process Pr4, a message is transmitted from the charging station 100 to the charging system 1 indicating start of charging of the vehicle.

In process Pr5, a message indicating the start of charging is transmitted from the charging system 1 to the mobile terminal 200 of the user. The application program displays a message indicating the start of charging.

In process Pr6, a charging termination notification is performed. Upon completing charging of the vehicle, the charging station 100 transmits a message indicating completion of charging to the charging system 1.

In process Pr7, a charging termination announcement to the user is performed. The charging system 1 transmits a message indicating termination of charging to the mobile terminal 200 of the user. The application program displays the message indicating termination of charging.

In process Pr8, an instruction is transmitted from the charging system 1 to the mobile terminal 200 of the user to disconnect the connector. The application program displays a message prompting the user to remove the charging connector 5 from the vehicle.

In process Pr9, a pre-termination check is performed. The charging system 1 performs a final check. The pre-termination check includes checking the removal of the charging connector 5 from the vehicle.

In step S130 of FIG. 5, for example, the processes Pr2 to Pr5 of FIG. 8 are executed. After execution in step S130, the process proceeds to step S140.

In step S140, a determination is made as to whether charging is complete. In the case where the charging completion message of the process Pr6 illustrated in FIG. 8 is received, a positive determination is made in step S140. If a positive determination is made in step S140, the process proceeds to step S150, whereas if a negative determination is made, the determination in step S140 is repeated.

In step S150, processing for disconnecting the charging connector 5 is performed. The charging system 1 executes the processes Pr7 and Pr8 illustrated in FIG. 8 to prompt the user to remove the charging connector 5 from the vehicle. After execution in step S150, the process proceeds to step S160.

In step S160, a determination is made as to whether the voltage of the voltage monitor is 0 [V]. The detection unit of the communication control board 30 acquires the battery voltage of the target vehicle via the signal line 7. If the acquired battery voltage is 0 [V], a positive determination is made in step S160 indicating the removal of the charging connector 5. If a positive determination is made in step S160, the process proceeds to step S180, whereas if a negative determination is made, the process proceeds to step S170.

In step S170, a re-instruction for connector disconnection is issued. The charging system 1 again executes the process Pr8 illustrated in FIG. 8. After execution in step S170, the process proceeds to step S160.

In step S180, termination processing is performed. In the present embodiment, the termination processing includes charging-fee payment processing. The charging-fee payment processing is performed, for example, in accordance with the processing sequence illustrated in FIG. 9.

The payment of the charging fee by the user is executed, for example, with the switching unit 10. The payment can be made by using credit card, electronic money, two-dimensional code payment, or any other methods. The switching unit 10 acquires information regarding a charging fee of each user from the charging station 100. The information regarding the charging fee can also be acquired via the server 300 or the management server 500.

The switching unit 10 collects fees from each user. For example, the switching unit 10 bills a user A for a charging fee "a" and a handling fee "$\alpha$" for the vehicle of the user A. The billing amount is transmitted to the mobile terminal 200 of the user A. The user A pays the billed fee using any payment method. The switching unit 10 similarly bills users B and C and collects fees.

The charging fee of each user is paid from the charging system 1 to the charging station 100. The charging fee is paid, for example, from the switching unit 10 via the server 300 and the management server 500. In this case, the charging fees of multiple users can be paid in aggregate. For example, a fee T can be paid from the switching unit 10 to the charging station 100. The fee T is equal to the sum of user A's charging fee "a", user B's charging fee "b", and user C's charging fee "c".

The payment of the charging fees in the charging system 1 is performed by the payment agency unit 320 of the server 300. The user-side payment procedure for payment of the charging fee to the charging system 1 can be performed between the mobile terminal 200 of the user and the switching unit 10, or between the mobile terminal 200 and the payment agency unit 320. In the case where collection of the fees is performed between the mobile terminal 200 and the payment agency unit 320, the payment agency unit 320 acquires information regarding the charging fee and the parking space number, for example, from the communication control board 30 of the charging station 100 or the management server 500.

The fee payment processing of the present embodiment allows the user to pay the charging fee at the plurality of charging stations 100 using any payment method. For example, it is possible to perform payment using electronic money even at a charging station 100 that does not offer electronic money as a payment method option.

After execution of the termination processing including payment processing in step S180, the process proceeds to step S190. In step S190, the number assigned to the disconnected charging connector 5 is released to be made available. Once step S190 is executed, the flowchart ends.

Moreover, in the case where the plurality of charging stations 100 are operated under a common power service contract, it is desirable to create the charging schedule so that the power consumption does not exceed the contracted power. In FIG. 10, as the charging station 100, two charging stations of a first station 100A and a second station 100B are illustrated. The two stations 100A and 100B are supplied with electric power under the common power service contract. The contracted power in the power service contract is Z [kW].

The first station 100A is connected to a first unit 10A, which is the switching unit 10. The second station 100B is connected to a second unit 10B, which is the switching unit 10. The first station 100A includes a plurality of charging connectors $5i$ ($i$ = 1, 2,...). The charging power of a vehicle connected to the charging connector $5i$ is $xi$ [kW]. The second station 100B includes a plurality of charging connectors $5j$ ($j$ = 1, 2,...). The charging power of a vehicle connected to the charging connector $5j$ is $yj$ [kW].

The server 300 receives a charging request from the mobile terminal 200 of the user and creates a charging schedule for the first station 100A and the second station 100B. The charging power for each vehicle can be entered by the user or acquired from the vehicle via the switching unit 10.

The server 300 determines whether concurrent charging is possible at the two charging stations 100 based on the charging request for the first station 100A and the charging request for the second station 100B. If a charging request would result in concurrent charging, a determination is made as to whether such concurrent charging is permissible.

For example, in FIG. 10, the charging duration slot desired by the user of a vehicle X connected to the first station 100A overlaps with the charging duration slot desired by the user of a vehicle Y connected to the second station 100B. In this case, the server 300 determines whether concurrent charging is possible without exceeding the contracted power. The charging power of the vehicle X is x1 [kW], and the charging power of the vehicle Y is y1 [kW]. The concurrent charging is permitted if the following Formula (1) is satisfied.

$$Z > x1 + y1 \qquad\qquad\qquad (1)$$

On the other hand, if Formula (1) mentioned above is not satisfied, i.e., if the sum of the charging powers of the two vehicles is equal to or greater than the contracted power, the concurrent charging is prohibited. In such a case, the creation unit 310 of the server 300 can give priority to the user who transmitted the charging request earlier. For example, if the user of the vehicle X that transmitted a charging request earlier, the charging schedules for the stations 100A and 100B are created so that charging for the vehicle Y is performed after charging for the vehicle X.

The server 300 can also create the charging schedules for three or more charging stations 100. In the case where two or more charging stations 100 are charging in concurrent, the server 300 permits concurrent charging provided that the total charging power during the concurrent period is less than the contracted power. On the other hand, if the total charging power during the concurrent charging is equal to or greater than the contracted power, the concurrent charging is restricted. The creation unit 310 of the server 300 prohibits the concurrent charging or limits the count of the charging stations 100 allowed to charge concurrently, so that the total charging power remains below the contracted power.

Moreover, upon acceptance of a charging request, the communication control board 30 can check whether the number assigned to the parking space matches the number assigned to the charging connector 5. If the number assigned to the parking space entered in step S20 does not match the number assigned to the charging connector 5 indicated by the two-dimensional code 50, the system determines that this is a user input error and issues an announcement equivalent to the termination announcement in step S40. This suppresses, in advance, situations in which the user inadvertently submits a charging request for another vehicle.

The switching unit 10 is not limited to an add-on unit attached to the charging station 100. The switching unit 10 can be configured as part of the charging station 100. For example, the switching unit 10 can be located in the main body 110 of the charging station 100. In this case, the switching unit 10 can be accommodated inside the main body 110.

FIG. 11 illustrates the switching unit 10 disposed inside the main body 110. The switching unit 10 includes the input unit 3 to which the charging cable 120 is connected. The input unit 3 is, for example, a terminal to which the charging cable 120 is connected. From the input unit 3, a cable branches to each of the relays 41, 42, 43, 44, and 45. The signal line 140 is connected to the signal branching board 40 of the switching unit 10 inside the main body 110. The switching unit 10 is arranged, for example, so that the output unit CN is exposed from the housing of the main body 110. Each of the cables 6 is connected to the output unit CN.

As described above, the charging system 1 according to the present embodiment includes the plurality of charging connectors 5, the switching unit 10, the creation unit 310, and the control unit 20. The plurality of charging connectors 5 are arranged at the charging station 100 that charges a vehicle. The switching unit 10 is disposed between one of the charging cables 120 at the charging station 100 and the plurality of charging connectors 5. The creation unit 310 creates a charging schedule for the charging cable 120 based on a charging request from a user via wireless communication. The control unit 20 controls the switching unit 10 based on the created charging schedule and connects the charging cable 120 to one of the charging connectors 5 that is connected to the vehicle to be charged.

In the charging system 1 according to the present embodiment, the plurality of charging connectors 5 are provided for one charging cable 120. The control unit 20 controls the switching unit 10 based on the charging schedule and connects the charging cable 120 to the vehicle to be charged. The charging system 1 according to the present embodiment is capable of improving user convenience by enabling a charging request to be performed via wireless communication.

In the present embodiment, each of the plurality of charging connectors 5 is provided with the two-dimensional code 50 that identifies the charging connector 5. The charging request includes information regarding the two-dimensional code 50, which is read by a user operation, and information regarding the charging period. The creation unit 310 performs assignment of charging durations to the respective charging connectors 5 in the charging schedule. The use of the two-dimensional code 50 in the charging request reduces the likelihood of incorrectly entering the number assigned to the charging connector 5.

In the present embodiment, the switching unit 10 includes the input unit 3, the plurality of output units CN, and the plurality of relays 4. The input unit 3 is connected to the charging cable 120 of the charging station 100. The output unit CN is attachably and detachably connected to the charging connector 5. The relay 4 is configured to connect the input unit 3 to each of the output units CN or disconnect the input unit 3 from each of the output units CN. The charging connector 5 attachable to and detachable from the output units CN enables the count of charging connectors 5 used to be flexibly changed.

One example of the input unit 3 is an inlet connected to the connector 130 for charging included in the charging station 100. In this case, the switching unit 10 can be configured as an add-on unit installed on an existing charging station 100.

The charging system 1 according to the present embodiment includes the detection unit that detects the battery voltage of the vehicle connected to the charging connector 5. The control unit 20 checks the detachment of the charging connector 5 from the vehicle based on the battery voltage. This makes it possible to check the attachment and detachment status of the charging connector 5 to and from the vehicle.

The charging system 1 according to the present embodiment includes the payment agency unit 320. The payment agency unit 320 executes payment processing of the charging fee to the charging station 100 and, via communication with the mobile terminal 200 of the user, handles collection of the charging fee. It is possible for the payment agency unit 320 to improve user convenience in payment of the charging fee.

Moreover, the creation unit 310, which creates the charging schedule, can be provided in the control unit 20 instead of the server 300. In this case, the control unit 20 can perform acceptance of a charging request, creation of the charging schedule, and notification to the user of the determined charging duration. In the case where the plurality of charging stations 100 are operated under a common electricity service contract, it is preferable that the control unit 20 connected to any one of the charging stations 100 perform integrated control. The control unit 20 that performs integrated control creates the charging schedules for all the charging stations 100. In this case, it is preferable that the plurality of control units 20 communicate with one another so that the charging requests are aggregated to a single control unit 20.

The count of the charging connectors 5 connectable to the switching unit 10 is not limited to five as illustrated.

The matters disclosed in each of the above embodiments can be implemented in any appropriate combination.

Reference Signs List

| | |
|---|---|
| 1 | CHARGING SYSTEM |
| 2 | HOUSING |
| 3 | INPUT UNIT |
| 4 | RELAY |
| 41 | FIRST RELAY |
| 42 | SECOND RELAY |
| 43 | THIRD RELAY |
| 44 | FOURTH RELAY |
| 45 | FIFTH RELAY |
| 5 | CHARGING CONNECTOR |
| 51 | FIRST CONNECTOR |
| 52 | SECOND CONNECTOR |
| 53 | THIRD CONNECTOR |
| 54 | FOURTH CONNECTOR |
| 55 | FIFTH CONNECTOR |
| 6 | CABLE |
| 61 | FIRST CABLE |
| 62 | SECOND CABLE |
| 63 | THIRD CABLE |
| 64 | FOURTH CABLE |
| 65 | FIFTH CABLE |
| 7 | SIGNAL LINE |
| 71 | FIRST SIGNAL LINE |
| 72 | SECOND SIGNAL LINE |
| 73 | THIRD SIGNAL LINE |
| 74 | FOURTH SIGNAL LINE |

| 75 | FIFTH SIGNAL LINE |
| 8 | SWITCH |
| 81 | FIRST SWITCH |
| 82 | SECOND SWITCH |
| 83 | THIRD SWITCH |
| 84 | FOURTH SWITCH |
| 85 | FIFTH SWITCH |
| 9 | CONNECTOR |
| 10 | SWITCHING UNIT |
| 20 | CONTROL UNIT |
| 30 | COMMUNICATION CONTROL BOARD |
| 40 | SIGNAL BRANCHING BOARD |
| 50 | TWO-DIMENSIONAL CODE |
| 100 | CHARGING STATION |
| 110 | MAIN BODY |
| 120 | CHARGING CABLE |
| 130 | CONNECTOR |
| 140 | SIGNAL LINE |
| 150 | CONTROL CIRCUIT |
| 200 | MOBILE TERMINAL |
| 300 | SERVER |
| 310 | CREATION UNIT |
| 320 | PAYMENT AGENCY UNIT |
| 400 | INTERNET NETWORK |
| 500 | MANAGEMENT SERVER |
| BT | BOLT |
| C1, C2, C3, C4, C5 | VEHICLE |
| CN | OUTPUT UNIT |
| CN1 | FIRST OUTPUT UNIT |

CN2            SECOND OUTPUT UNIT

CN3            THIRD OUTPUT UNIT

CN4            FOURTH OUTPUT UNIT

CN5            FIFTH OUTPUT UNIT

P1             FIRST SPACE

P2             SECOND SPACE

P3             THIRD SPACE

P4             FOURTH SPACE

P5             FIFTH SPACE

PK             PARKING LOT

**Claims**

1. A charging system comprising:

   a plurality of charging connectors disposed at a charging station that charges a vehicle;
   a switching unit disposed between one charging cable of the charging station and the plurality of charging connectors;
   a creation unit configured to create a charging schedule for the charging cable based on a charging request from a user via wireless communication; and
   a control unit configured to, based on the created charging schedule, control the switching unit and connect the charging cable to one of the charging connectors connected to a vehicle to be charged.

2. The charging system according to claim 1, wherein

   each of the plurality of charging connectors is provided with a two-dimensional code used to identify the charging connector,
   the charging request includes information regarding the two-dimensional code read by a user operation and information regarding a desired charging duration, and
   the creation unit performs assignment of the charging duration to each of the charging connectors in the charging schedule.

3. The charging system according to claim 1, wherein
   the switching unit includes an input unit connected to the charging cable, a plurality of output units to which each of the charging connectors is attachably and detachably connected, and a plurality of relays configured to connect the input unit to each of the output units or disconnect the input unit from each of the output units.

4. The charging system according to claim 3, wherein
   the input unit is an inlet connected to a connector for charging included in the charging station.

5. The charging system according to claim 1, further comprising:

   a detection unit configured to detect a battery voltage of a vehicle connected to the charging connector,
   wherein the control unit is configured to check, based on the battery voltage, removal of the charging connector from the vehicle.

6. The charging system according to claim 1, further comprising:
   a payment agency unit configured to perform payment processing of a charging fee to the charging station and to perform collection of the charging fee via communication with a mobile terminal of the user.

# FIG.1

EP 4 757 119 A1

FIG.2

**FIG.3**

# FIG.4

## FIG.5

START

CONNECTION OF CONNECTOR ~S10

·ENTER PARKING LOT NUMBER IN APPLICATION
·ENTER 2D CODE OF CONNECTOR ~S20

IS RELEVANT NUMBER NOT
USED BY ANOTHER USER? S30 — NO → TERMINATION ANNOUNCEMENT S40

YES

·ENTER DESIRED POWER RECEIVING TIME AND
CHARGING AVAILABLE TIME ~S50

CREATE CHARGING SCHEDULE ~S60

NOTIFY CHARGING DURATION ~S70

STANDBY ~S80

IS CHARGING START
TIME POINT ARRIVED? S90 — NO

YES

CHARGING START ANNOUNCEMENT ~S100

IS PERMITTED? S110 — NO → CHARGING DURATION REVIEW PROCESSING S120

YES

START OF CHARGING ~S130

IS CHARGING COMPLETED? S140 — NO

YES

DISCONNECT CONNECTOR ~S150

IS VOLTAGE OF
VOLTAGE MONITOR 0 V? S160 — NO → ISSUE RE-INSTRUCTION FOR CONNECTOR DISCONNECTION S170

YES

TERMINATION PROCESSING ~S180

RELEASE NUMBER OF DISCONNECTED CONNECTOR ~S190

END

# FIG.6

200

·PLEASE ENTER PARKING SPACE NUMBER

·PLEASE READ 2D CODE OF CONNECTOR

# FIG.7

200

·WHAT IS DESIRED
 CHARGING START TIME POINT?

·WHAT IS DESIRED CHARGING DURATION?

# FIG.8

# FIG.9

FIG.10

EP 4 757 119 A1

FIG.11

# EP 4 757 119 A1

## INTERNATIONAL SEARCH REPORT

| | International application No. |
|---|---|
| | **PCT/JP2024/023070** |

### A. CLASSIFICATION OF SUBJECT MATTER

***H02J 13/00***(2006.01)i; ***H02J 1/00***(2006.01)i; ***H02J 7/00***(2006.01)i
FI: H02J13/00 311A; H02J13/00 301A; H02J13/00 311K; H02J7/00 P; H02J7/00 301C; H02J7/00 301B; H02J13/00 301J; H02J1/00 306L

According to International Patent Classification (IPC) or to both national classification and IPC

### B. FIELDS SEARCHED

Minimum documentation searched (classification system followed by classification symbols)
H02J13/00; H02J1/00; H02J7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-129459 A (MITSUBISHI ELECTRIC CORPORATION) 02 September 2021 (2021-09-02)<br>    paragraphs [0010]-[0042], fig. 1-3 | 1 |
| Y |     paragraphs [0010]-[0042], fig. 1-3 | 2-6 |
| Y | JP 2021-022969 A (DELTA ELECTRONICS JAPAN INC.) 18 February 2021 (2021-02-18)<br>    paragraph [0034] | 2 |
| Y | JP 2021-176254 A (KABUSHIKI KAISHA TOYOTA JIDOSHOKKI) 04 November 2021 (2021-11-04)<br>    paragraph [0028] | 3-4 |
| Y | JP 2013-003779 A (TOYOTA HOME K.K.) 07 January 2013 (2013-01-07)<br>    paragraph [0027] | 5 |
| Y | JP 2022-125068 A (NEC CORPORATION) 26 August 2022 (2022-08-26)<br>    paragraphs [0036], [0047] | 6 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/023070**

| Patent document cited in search report | | | Publication date (day/month/year) | Patent family member(s) | Publication date (day/month/year) |
|---|---|---|---|---|---|
| JP | 2021-129459 | A | 02 September 2021 | (Family: none) | |
| JP | 2021-022969 | A | 18 February 2021 | WO 2021/015227 A1 paragraph [0034] | |
| JP | 2021-176254 | A | 04 November 2021 | (Family: none) | |
| JP | 2013-003779 | A | 07 January 2013 | (Family: none) | |
| JP | 2022-125068 | A | 26 August 2022 | US 2019/0225107 A1 paragraphs [0045], [0056] WO 2018/061857 A1 CN 109874355 A | |

Form PCT/ISA/210 (patent family annex) (July 2022)

**EP 4 757 119 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3151047 U